# EUROPEAN PATENT APPLICATION

(11) **EP 4 622 059 A1**
(43) Date of publication of application: **24.09.2025**
(21) Application number: 23938153.6
(22) Date of filing: 04.09.2023
(51) Int. Cl.: H02J 15/00, H02J 7/00

(54) **ENERGY STORAGE DEVICE AND CONTROL METHOD THEREFOR**

(30) Priority: 22.05.2023 CN 202310573797
(71) Applicant: Contemporary Amperex Technology Co., Limited, Ningde, Fujian 352100 (CN)
(72) Inventor: WU, Kai, Ningde, Fujian 352100 (CN); WANG, Xiao, Ningde, Fujian 352100 (CN); WANG, Chongxi, Ningde, Fujian 352100 (CN); WANG, Xuehui, Ningde, Fujian 352100 (CN); WEI, Zhili, Ningde, Fujian 352100 (CN); CHEN, Xiaobo, Ningde, Fujian 352100 (CN); DAN, Zhimin, Ningde, Fujian 352100 (CN)
(74) Representative: Ziebig Hengelhaupt Intellectual Property Attorneys Patentanwaltskanzlei PartGmbB
(86) International application number: PCT/CN2023/116766
(87) International publication number: WO 2024/239484

(57) **Abstract**

The present application provides an energy storage device and a control method therefor, capable of effectively solving the problem of low-voltage power supply in energy storage devices. The energy storage device comprises a PCS which comprises a plurality of H-bridge links respectively connected to a plurality of battery units. Each of the battery units comprises at least one battery. Each of the H-bridge links is used for conversion of an alternating current signal and a direct current signal which charges and discharges the battery by means of a direct current bus between the H-bridge link and the battery unit. The energy storage device further comprises an auxiliary source device for providing a low-voltage power source, which is configured to obtain power from the direct current bus or to obtain constant power from the battery.

## Description

The present application claims priority to the invention patent application filed with the China Patent Office on May 22, 2023 and entitled "Energy Storage Device and Control Method Therefor", with application No. 202310573797.3, which is incorporated herein by reference in its entirety.

### TECHNICAL FIELD

This application relates to the field of batteries, and in particular, to an energy storage device and a control method therefor.

### BACKGROUND

With the rapid development of energy technology, batteries have become an indispensable part of production and life. In some scenarios, a plurality of batteries may be connected in series and parallel with each other to form a battery system for use in an energy storage system, and power transmission may be performed between the energy storage system and a high-voltage power grid. However, many low-voltage electric equipments in the energy storage system need low-voltage power sources to ensure their normal operation. Therefore, it is necessary to solve the problem of low-voltage power supply in energy storage devices.

### SUMMARY

The embodiments of this application provide an energy storage device and a control method therefor, capable of effectively solving the problem of low-voltage power supply in energy storage devices.

In a first aspect, there is provided an energy storage device, which comprises a PCS. The PCS comprises a plurality of H-bridge links respectively connected to a plurality of battery units. Each of the battery units comprises at least one battery. Each of the H-bridge links is used for conversion of an alternating current signal and a direct current signal which charges and discharges the battery by means of a direct current bus between the H-bridge link and the battery unit. The energy storage device further comprises an auxiliary source device for providing a low-voltage power source, which is configured to obtain power from the direct current bus or to obtain constant power from the battery. The auxiliary source device comprises, for example, a DC/DC converter.

**In** the embodiments of this application, an auxiliary source in the H-bridge link and/or the battery unit does not obtain power from the power grid, but obtains power from the direct current bus or obtains constant power from the battery. Since there is no need to obtain power from the power grid, there is no need to provide a high-voltage resistant isolation transformer, and it is only necessary to use a transformer of the auxiliary source itself to achieve isolation, which effectively solves the problem of low-voltage power supply in energy storage devices without increasing additional costs.

**In** one implementation, the battery unit further comprises a relay unit connected to the battery. The relay unit comprises a first relay connected to a first electrode of the battery. One end of the auxiliary source device is connected between the first relay and the first electrode, and the other end of the auxiliary source device is connected to a second electrode of the battery. For example, the first electrode is a positive electrode, and the first relay is a main positive relay connected to the positive electrode. One end of the auxiliary source device is connected between the main positive relay and the positive electrode of the battery, and the other end is directly connected to a negative electrode of the battery, so that constant power may be obtained from the battery.

**In** one implementation, the battery unit further comprises a relay unit connected to the battery. The relay unit comprises a first relay connected to a first electrode of the battery and a second relay connected to a second electrode of the battery. One end of the auxiliary source device is connected between the first relay and the first electrode, and the other end of the auxiliary source device is connected between the second relay and the second electrode. For example, the first electrode is a positive electrode, the second electrode is a negative electrode, the first relay is a main positive relay connected to the positive electrode, and the second relay is a main negative relay connected to the negative electrode. One end of the auxiliary source device is connected between the main positive relay and the positive electrode of the battery, and the other end is connected between the main negative relay and the negative electrode of the battery, so that constant power may be obtained from the battery.

**In** one implementation, the battery unit further comprises an SBMU corresponding to the battery, and the auxiliary source device comprises a first auxiliary source for providing a low-voltage power source to the SBMU, which is configured to obtain power from the direct current bus, or obtain constant power from the battery.

**In** this embodiment, the first auxiliary source for providing the low-voltage power source for the SBMU can obtain power from the direct current bus or obtain constant power from the battery, which provides multiple possible power supply modes for the SBMU, making the power supply to the SBMU more reliable.

**In** one implementation, an auxiliary source switch is provided between one end of the first relay connected to the battery and the first auxiliary source. A control module of the H-bridge link is used for controlling a bypass switch of the H-bridge link, and the SBMU is used for controlling the relay unit and the auxiliary source switch, so that the first auxiliary source obtains power from the direct current bus or obtains constant power from the battery.

**In** this embodiment, the bypass switch of the H-bridge link as well as the relay unit and the auxiliary source switch connected to the battery may be controlled according to failure conditions in the energy storage device, such as whether there is a failure, or whether the failure location is in the H-bridge link or in the battery unit, thereby realizing that the first auxiliary source obtains power from the direct current bus or obtains constant power from the battery.

**In** one implementation, in a case where neither the H-bridge link nor the battery unit fails, the control module of the H-bridge link is used for controlling the bypass switch of the **H-**bridge link to open, the SBMU is used for controlling the relay unit to close and the auxiliary source switch to close, and the first auxiliary source competitively obtains power between the direct current bus and the battery. The competitive power obtainment comprises, for example, obtaining power from the direct current bus in a case where a first voltage on the direct current bus is greater than a second voltage between the first relay and the battery, and obtaining constant power from the battery in a case where the second voltage is greater than the first voltage.

**In** this embodiment, in a case that the H-bridge link and the battery unit are normal, the bypass switch of the H-bridge link is opened, the relay unit and the auxiliary source switch are closed, and the first auxiliary source for providing the low-voltage power source for the SBMU can competitively obtain power from the direct current bus and the battery, which provides multiple possible power supply modes for the SBMU, making the power supply to the SBMU more reliable.

**In** one implementation, in a case of a failure of the H-bridge link, the control module of the H-bridge link is used for controlling the bypass switch of the H-bridge link to close, the SBMU is used for controlling the relay unit to open and the auxiliary source switch to close, and the first auxiliary source obtains constant power from the battery.

**In** this embodiment, in the case of the failure of the H-bridge link, the bypass switch of the H-bridge link is closed to bypass the failed H-bridge link from the plurality of cascaded **H-**bridge links, and the relay unit to which each battery is connected is opened. At this time, although the H-bridge link is bypassed leaving no power on the direct current bus, since the battery unit does not fail, the first auxiliary source may obtain constant power from the battery so that the SBMU can normally monitor the status of the battery.

**In** one implementation, in a case of a failure of a first battery in the battery unit, the control module of the H-bridge link is used for controlling the bypass switch of the H-bridge link to open, the SBMU corresponding to the first battery is used for controlling the relay unit corresponding to the first battery to open and the corresponding auxiliary source switch to open, and the first auxiliary source corresponding to the first battery obtains power from the direct current bus.

**In** this embodiment, in a case of a battery failure in part of electric cabinets of the battery unit, the bypass switch of the H-bridge link is opened so that there is power on the direct current bus, and the relay unit to which the failed battery is connected is opened to reduce the risk brought about by the battery failure, at which time the first auxiliary source may obtain power from the direct current bus despite the failure of the battery, so that the SBMU can normally monitor the status of the battery.

**In** one implementation, in a case where an unfailed second battery in the battery unit meets charging/discharging requirements of the energy storage device, the SBMU corresponding to the second battery is further used for controlling the relay unit corresponding to the second battery to close and the corresponding auxiliary source switch to close, and the first auxiliary source corresponding to the second battery competitively obtains power between the direct current bus and the battery.

For the unfailed batteries in the remaining electric cabinets, if they can meet the charging and discharging requirements of the energy storage device, the relay units in the remaining electric cabinets remain closed, so that these batteries continue to be connected to the energy storage device for normal power supply, reducing the influence of the battery failure on the energy storage device. At this time, the first auxiliary source may competitively obtain power between the direct current bus and the battery.

**In** one implementation, in a case where the unfailed second battery in the battery unit does not meet the charging/discharging requirements of the energy storage device, the SBMU corresponding to the second battery is further used for controlling the relay unit corresponding to the second battery to open and the corresponding auxiliary source switch to close, and the first auxiliary source corresponding to the second battery competitively obtains power between the direct current bus and the battery.

For the unfailed batteries in the remaining electric cabinets, if they cannot meet the charging/discharging requirements of the energy storage device, the relay units in the remaining electric cabinets are opened. Since the H-bridge link is in operation and there is power on the direct current bus, and since the batteries do not fail and the auxiliary source switches remain closed, the first auxiliary sources in these electric cabinets may competitively obtain power between the direct current bus and the battery, so that the SBMU can normally monitor the status of the battery.

**In** one implementation, a first diode is provided between the first auxiliary source and the direct current bus, a second diode is provided between one end of the first relay connected to the battery and the first auxiliary source, and the second diode is connected to the auxiliary source switch. **In** the case where the first voltage on the direct current bus is greater than the second voltage between the first relay and the battery, the first diode is turned on and the second diode is turned off, so that the first auxiliary source obtains power from the direct current bus, and in the case where the second voltage is greater than the first voltage, the second diode is turned on and the first diode is turned off, so that the first auxiliary source obtains constant power from the battery.

**In** this embodiment, diodes are utilized to realize that the first auxiliary source competitively obtains power between the direct current bus and the battery, which is simple in operation and low in cost.

In one implementation, the number of the at least one battery is multiple. The battery unit further comprises an MBMU connected to the SBMUs corresponding to the plurality of batteries. The auxiliary source device comprises a second auxiliary source for providing a low-voltage power source to the MBMU, which is configured to obtain power from the direct current bus.

In this embodiment, since the low-voltage electric equipments such as the MBMU are not placed in the electric cabinet but in a general control box outside the electric cabinet, in order to avoid exposing high-voltage constant power to the outside, which would pose a safety hazard during installation and maintenance, the second auxiliary source in a power distribution cabinet for providing a low-voltage power source for the low-voltage electric equipments such as the MBMU does not obtain power from the battery but from the direct current bus.

In one implementation, the auxiliary source device comprises a third auxiliary source in the H-bridge link for providing a low-voltage power source, which is configured to obtain power from the direct current bus.

Similarly, the control module, the bypass switch, IGBT switches, and the like of the H-bridge link also need to provide a low-voltage power source by means of an auxiliary source, and the third auxiliary source in the H-bridge link for providing a low-voltage power source also obtain power from the direct current bus to maintain the normal function of the H-bridge link.

In one implementation, the SBMU in the battery unit is connected to a management system of the battery unit through an optical fiber. The management system comprises an EMS or a BMS. The optical fiber is used for transmitting an instruction sent by the management system to the SBMU, and the instruction is used for instructing the SBMU to control the relay unit to close, so as to realize black start of the energy storage device.

In this embodiment, optical fiber communication is required between the SBMU and the management system to enable the energy storage device to achieve black start. Since the first auxiliary source can obtain constant power from the battery, there is constant power on the SBMU. During black start, the management system issues an instruction to the SBMU through the optical fiber, and the SBMU controls, based on the instruction, the corresponding relay unit to close, so that there is power on the H-bridge link and the battery unit corresponding thereto, thereby starting by itself.

**In a** second aspect, there is provided a control method for an energy storage device. The energy storage device comprises a PCS. The PCS comprises a plurality of H-bridge links respectively connected to a plurality of battery units. Each of the battery units comprises at least one battery. Each of the H-bridge links is used for conversion of an alternating current signal and a direct current signal which charges and discharges the battery by means of a direct current bus between the H-bridge link and the battery unit. The energy storage device further comprises an auxiliary source device for providing a low-voltage power source. The control method comprises: controlling the auxiliary source device to obtain power from the direct current bus or to obtain constant power from the battery. The auxiliary source device comprises, for example, a DC/DC converter.

**In** one implementation, the battery unit further comprises a relay unit connected to the battery. The relay unit comprises a first relay connected to a first electrode of the battery. One end of the auxiliary source device is connected between the first relay and the first electrode, and the other end of the auxiliary source device is connected to a second electrode of the battery.

**In** one implementation, the battery unit further comprises a relay unit connected to the battery. The relay unit comprises a first relay connected to a first electrode of the battery and a second relay connected to a second electrode of the battery. One end of the auxiliary source device is connected between the first relay and the first electrode, and the other end of the auxiliary source device is connected between the second relay and the second electrode.

**In** one implementation, the battery unit further comprises an SBMU corresponding to the battery. The auxiliary source device comprises a first auxiliary source for providing a low-voltage power source to the SBMU. The controlling the auxiliary source device to obtain power from the direct current bus or to obtain constant power from the battery comprises: controlling the first auxiliary source to obtain power from the direct current bus or to obtain constant power from the battery.

**In** one implementation, an auxiliary source switch is provided between one end of the first relay connected to the battery and the first auxiliary source. The controlling the first auxiliary source to obtain power from the direct current bus or to obtain constant power from the battery comprises: controlling a bypass switch of the H-bridge link, the relay unit, and the auxiliary source switch, so that the first auxiliary source obtains power from the direct current bus or obtains constant power from the battery.

**In** one implementation, the controlling the bypass switch of the H-bridge link, the relay unit, and the auxiliary source switch, so that the first auxiliary source obtains power from the direct current bus or obtains constant power from the battery comprises: in a case where neither the **H-**bridge link nor the battery unit fails, controlling the bypass switch of the H-bridge link to open, the relay unit to close, and the auxiliary source switch to close, so that the first auxiliary source competitively obtains power between the direct current bus and the battery. The competitive power obtainment comprises, for example, obtaining power from the direct current bus in a case where a first voltage on the direct current bus is greater than a second voltage between the first relay and the battery, and obtaining constant power from the battery in a case where the second voltage is greater than the first voltage.

**In** one implementation, the controlling the bypass switch of the H-bridge link, the relay unit, and the auxiliary source switch, so that the first auxiliary source obtains power from the direct current bus or obtains constant power from the battery comprises: in a case of a failure of the **H-**bridge link, controlling the bypass switch of the H-bridge link to close, the relay unit to open, and the auxiliary source switch to close so that the first auxiliary source obtains constant power from the battery.

**In** one implementation, the controlling the bypass switch of the H-bridge link, the relay unit, and the auxiliary source switch, so that the first auxiliary source obtains power from the direct current bus or obtains constant power from the battery comprises: in a case of a failure of a first battery in the battery unit, controlling the bypass switch of the H-bridge link to open, the relay unit to which the first battery is connected to open, and the corresponding auxiliary source switch to open, so that the first auxiliary source corresponding to the first battery obtains power from the direct current bus.

**In** one implementation, the controlling the bypass switch of the H-bridge link, the relay unit, and the auxiliary source switch, so that the first auxiliary source obtains power from the direct current bus or obtains constant power from the battery comprises: in a case where an unfailed second battery in the battery unit meets charging/discharging requirements of the energy storage device, controlling the relay unit corresponding to the second battery to close and the corresponding auxiliary source switch to close, so that the first auxiliary source corresponding to the second battery competitively obtains power between the direct current bus and the battery.

**In** one implementation, the controlling the bypass switch of the H-bridge link, the relay unit, and the auxiliary source switch, so that the first auxiliary source obtains power from the direct current bus or obtains constant power from the battery comprises: in a case where the unfailed second battery in the battery unit does not meet the charging/discharging requirements of the energy storage device, controlling the relay unit corresponding to the second battery to open and the corresponding auxiliary source switch to close, so that the first auxiliary source corresponding to the second battery competitively obtains power between the direct current bus and the battery.

**In** one implementation, a first diode is provided between the first auxiliary source and the direct current bus, a second diode is provided between one end of the first relay connected to the battery and the first auxiliary source, and the second diode is connected to the auxiliary source switch. **In** the case where the first voltage on the direct current bus is greater than the second voltage between the first relay and the battery, the first diode is turned on and the second diode is turned off, so that the first auxiliary source obtains power from the direct current bus, and in the case where the second voltage is greater than the first voltage, the second diode is turned on and the first diode is turned off, so that the first auxiliary source obtains constant power from the battery.

**In** one implementation, the number of the at least one battery is multiple. The battery unit further comprises an MBMU connected to the SBMUs corresponding to the plurality of batteries. The auxiliary source device comprises a second auxiliary source for providing a low-voltage power source to the MBMU. The control method further comprises: controlling the second auxiliary source to obtain power from the direct current bus.

**In** one implementation, the auxiliary source device comprises a third auxiliary source in the H-bridge link for providing a low-voltage power source. The control method further comprises: controlling the third auxiliary source to obtain power from the direct current bus.

**In** one implementation, the SBMU in the battery unit is connected to a management system of the battery unit through an optical fiber. The management system comprises an EMS or a BMS. The control method further comprises: receiving an instruction sent by the management system through the optical fiber; and controlling, according to the instruction, the relay unit to close, so as to achieve black start of the energy storage device.

### DESCRIPTION OF DRAWINGS

In order to more clearly illustrate the technical solutions of the embodiments of the present application, the drawings required to be used in the embodiments of the present application will be briefly introduced below. Obviously, the drawings described below are only some embodiments of the present application. For persons of ordinary skill in the art, other drawings can also be obtained from the drawings without creative work.
FIG. 1 is a schematic diagram of an energy storage device according to an embodiment of the present application.
FIG. 2 is a schematic diagram of an energy storage sub-unit according to an embodiment of the present application.
FIG. 3 is a schematic diagram of power obtainment of an auxiliary source in a battery unit according to an embodiment of the present application.
FIG. 4 is a schematic diagram of power obtainment of an auxiliary source in a general control box according to an embodiment of the present application.
FIG. 5 is a schematic diagram of power obtainment of an auxiliary source in an H-bridge link according to an embodiment of the present application.
FIG. 6 is a schematic diagram of the power obtainment modes of a first auxiliary source in different states.
FIG. 7 is a schematic diagram of optical fiber communication between a BMS/EMS and an SBMU.
FIG. 8 is a schematic flow diagram of a control method for an energy storage device according to an embodiment of the present application.

In the drawings, the figures are not drawn to actual scale.

### DESCRIPTION OF EMBODIMENTS

The following further describes implementations of the present application in detail with reference to the accompanying drawings and embodiments. The following detailed description of the embodiments and the accompanying drawings are used to describe the principles of the present application by way of example, but are not intended to limit the scope of the present application, that is, the present application is not limited to the described embodiments.

**In** the description of the present application, it should be noted that, unless otherwise specified, "a plurality of" means two or more, and orientations or positional relationships indicated by the terms "upper", "lower", "left", "right", "inner", "outer", and the like are merely for convenience of description of the present application and simplicity of description, and do not indicate or imply that an apparatus or a component to be referred to must have a specific orientation, or be constructed and operated in a specific orientation, and therefore should not be understood as a limitation on the present application. **In** addition, the terms "first", "second", "third", and the like are used merely for description purposes, and should not be understood as an indication or implication of relative importance.

**In** the description of the present application, it should be further noted that, unless explicitly specified and defined otherwise, the terms "mounted", "connected", and "connect" are to be understood in a broad sense, for example, may be fixedly connected, detachably connected, or integrally connected, may be directly connected, or may be indirectly connected through an intermediate medium. Those of ordinary skill in the art may understand specific meanings of these terms in the present application according to specific situations.

**In** the present application, the term "and/or" only describes an association relationship between associated objects, and indicates that three relationships may exist. For example, A and/or B may indicate the following three cases: A exists, both A and B exist, and B exists. **In** addition, the symbol "/" in the present application generally represents an "or" relationship between associated objects.

Unless otherwise defined, all technical and scientific terms used in the present application have the same meaning as commonly understood by a person skilled in the art of the present application. **In** the present application, the terms used in the specification of the present application are used only for the purpose of describing specific embodiments and are not intended to limit the present application, and the terms "comprise", "have", and any variations thereof in the specification and claims of the present application and the foregoing description of the drawings are intended to cover a non-exclusive inclusion. The terms "first", "second", and the like in the specification and claims of the present application or in the accompanying drawings are used to distinguish between different objects, and are not used to describe a specific sequence or a primary-secondary relationship.

An "embodiment" in the present application means that a specific feature, structure, or characteristic described with reference to the embodiment may be included in at least one embodiment of the present application. The phrase in various places in the description does not necessarily all refer to the same embodiment, or a separate or alternative embodiment mutually exclusive of other embodiments. A person skilled in the art explicitly and implicitly understands that the described embodiments in the present application may be combined with another embodiment.

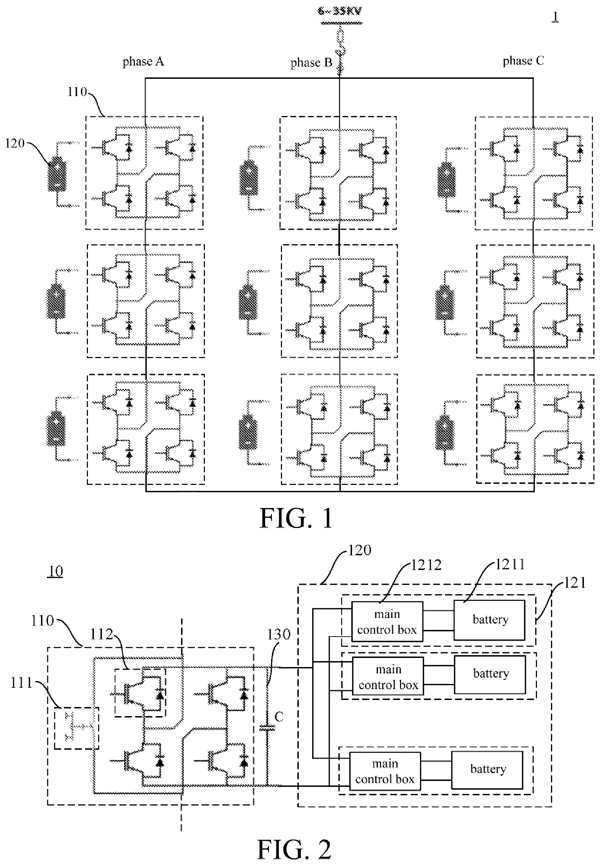

An energy storage device in the embodiments of the present application generally comprises a battery system and a power conversion system (PCS) formed by cascading a plurality of H-bridge links, i.e., an H-bridge cascaded energy storage PCS, so as to achieve alternating current/direct current conversion between the battery system and the power grid. For example, an alternating current of the power grid may charge a battery in the battery system after passing through the PCS, and the battery in the battery system may also be discharged to the power grid through the PCS. In an energy storage device 1 as shown in FIG. 1, an alternating current of the power grid, for example, an alternating current of 6 KV to 35 KV, is transmitted between the PCS and the battery system. The PCS comprises a plurality of H-bridge links 110 cascaded together, and the battery system comprises a plurality of battery units 120, wherein one H-bridge link 110 is connected to a corresponding battery unit 120 to achieve alternating current/direct current conversion between the battery unit 120 and the power grid. It may be appreciated that each battery unit 120 comprises one battery or a plurality of batteries. In the embodiments of the present application, the battery may be a battery assembly formed by connecting a plurality of cells in series, in parallel, or in a mixed manner, wherein the mixed manner refers to a mixture of series connection and parallel connection, and the battery assembly may also be referred to as a battery cluster, a battery pack, a battery stack, or the like.

In general, it is necessary to provide a low-voltage power source for one or more low-voltage electric equipments in the energy storage system by means of an auxiliary source device which may obtain power from the power grid and convert the high-voltage power of the power grid into the low-voltage power required by the low-voltage electric equipments. However, since each H-bridge link 110 is suspended at a different potential, a potential difference between two adjacent H-bridge links 110 depends on a voltage platform of the battery system, which refers to the battery voltage in a power source unit corresponding to each H-bridge link 110 in the PCS. For example, if the voltage of the battery unit 120 corresponding to each H-bridge link 110 is 1000 V, then the voltage of 35 battery units 120 cascaded through the H-bridge links 110 reaches 35 KV. If the auxiliary source device obtains power from the power grid, the problem of isolation and voltage resistance of the H-bridge link 110 with the highest potential must be considered. Even if power is obtained from an adjacent H-bridge link 110, a potential difference between the adjacent H-bridge links 110 needs to be considered, and an insulation problem also needs to be considered for the arrangement of a wiring harness. Typically, additional high-voltage resistant isolation transformers need to be added when power is obtained from the power grid, which increases additional costs.

To this end, the present application provides an energy storage solution, which aims to effectively solve the problem of low-voltage power supply in energy storage devices. By configuring an auxiliary source of each low-voltage electric equipment to obtain power from a direct current bus between the H-bridge link and the battery unit or to obtain constant power from the battery, the problem of low-voltage power supply in energy storage devices is solved without increasing additional costs. The constant power generally refers to a power source that is connected from a battery and is not controlled by any switch, relay, or the like, that is, as long as the battery has power and the circuit does not fail, there will always be power.

The energy storage device 1 according to an embodiment of the present application comprises a PCS formed by cascading a plurality of H-bridge links 110, and a plurality of battery units 120 respectively connected to the plurality of H-bridge links 110. Hereinafter, each H-bridge link 110 and its corresponding battery unit 120 are also referred to as an energy storage sub-unit 10. For example, as shown in FIG. 2, in each energy storage sub-unit 10, the battery unit 120 comprises one or more batteries 1211. The plurality of batteries 1211 may be connected in parallel, for example. After the plurality of batteries 1211 are connected in parallel, the positive electrode is connected to one end of the H-bridge link 110, and the negative electrode is connected to the other end of the H-bridge link 110.

Optionally, the battery unit 120 may further comprise a main control box 1212 connected to each battery 1211. Generally, each battery 1211 and the main control box 1212 connected thereto are referred to as an electric cabinet 121. For example, as shown in FIG. 2, the battery unit 120 comprises one or more electric cabinets 121, and each electric cabinet 121 comprises a battery 1211 and a main control box 1212. The main control box 1212 may further comprise a relay unit (not shown in the figure) connected to the battery 1211, etc., and the relay unit comprises, for example, a main positive relay connected to the positive electrode of the battery and/or a main negative relay connected to the negative electrode of the battery.

The H-bridge link 110 is used for conversion of an alternating current signal and a direct current signal which may charge and discharge the battery 1211 through a direct current bus 130 between the H-bridge link 110 and the battery unit 120.

For example, as shown in FIGS. 1 and 2, in the case of charging the battery, an alternating current signal from the power grid is converted into a direct current signal after passing through the H-bridge link 110, and the direct current signal charges the battery 1211 through the direct current bus 130. Similarly, in the case of discharging the battery 1211, a direct current signal output from the battery 1211 is transmitted to the H-bridge link 110 through the direct current bus 130, and converted into an alternating current signal after passing through the H-bridge link 110, and the alternating current signal is output to the power grid or a corresponding load.

In an embodiment of the present application, an auxiliary source device for providing a low-voltage power source is provided in the energy storage device 1, which is configured to obtain power from the direct current bus 130 or obtain constant power from the battery 1211.

That is to say, the auxiliary source device in each energy storage sub-unit 10 may obtain power from the direct current bus 130 or obtain constant power from the battery 1211. Obtaining power from the direct current bus 130 comprises, for example, obtaining power from a capacitor C of the direct current bus.

The direct current bus 130 is located between the H-bridge link 110 and the battery unit 120, and comprises at least a first portion connected between one end of the H-bridge link 110 and the positive electrode of the battery unit 120 and a second portion connected between the other end of the H-bridge link 110 and the negative electrode of the battery unit 120. One end of the capacitor C of the direct current bus is connected to the first portion of the H-bridge link 110, and the other end is connected to the second portion of the H-bridge link 110. The electrical energy on the capacitor C of the direct current bus comes from the H-bridge link 110.

In an embodiment of the present application, each auxiliary source in the energy storage sub-unit 10 does not obtain power from the power grid, but obtains power from the direct current bus 130, or obtains constant power from the battery 1211. Since there is no need to obtain power from the power grid, there is no need to provide a high-voltage resistant isolation transformer, and it is only necessary to use a transformer of the auxiliary source itself to achieve isolation, which effectively solves the problem of low-voltage power supply in energy storage devices without increasing additional costs.

The auxiliary source device comprises one or more auxiliary sources located in the H-bridge link 110 and/or the battery unit 120, which may be, for example, direct current/direct current (DC/DC) converters.

The relay unit connected to each battery 1211 is located on a charge/discharge main circuit of the battery 1211. The relay unit may comprise a first relay connected to a first electrode of the battery 1211, wherein one end of the auxiliary source device is connected between the first relay and the first electrode, and the other end of the auxiliary source device is connected to a second electrode of the battery 1211; alternatively, the relay unit comprises a first relay connected to a first electrode of the battery 1211 and a second relay connected to a second electrode of the battery 1211, wherein one end of the auxiliary source device is connected between the first relay and the first electrode, and the other end is connected between the second relay and the second electrode.

For example, in a case where only a first relay is provided, the first electrode is a positive electrode, and the first relay is a main positive relay connected to the positive electrode. One end of the auxiliary source device is connected between the main positive relay and the positive electrode of the battery, and the other end is directly connected to the negative electrode of the battery, so that the auxiliary source device may obtain constant power from the battery 1211; for another example, in a case where a first relay and a second relay are simultaneously provided, the first electrode is a positive electrode, the first relay is a main positive relay connected to the positive electrode, the second electrode is a negative electrode, and the second relay is a main negative relay connected to the negative electrode. One end of the auxiliary source device is connected between the main positive relay and the positive electrode of the battery, and the other end is connected between the main negative relay and the negative electrode of the battery, so that the auxiliary source device may obtain constant power from the battery 1211.

Hereinafter, taking only a first relay being provided and the first relay being a main positive relay as an example, the energy storage device 1 according to an embodiment of the present application will be described.

It will be appreciated that since the battery 1211 is an energy storage element, constant power can be obtained from the battery 1211. That is, in a case where the battery 1211 operates normally, power can be obtained from the battery 1211 without being affected by the closing and opening of the relay or the like. In other words, as long as the battery 1211 does not fail, power can be obtained from the battery 1211, which thus is called constant power.

In an embodiment of the present application, obtaining constant power from the battery may also be expressed as obtaining power from an inner side of the relay unit or obtaining power between the relay unit and the battery 1211. Here, the inner side of the relay unit refers to the side between the relay unit and the battery 1211, that is, the side where one end of the relay unit connected to the battery 1211 is located, and accordingly, the side where the other end is located is an outer side of the relay unit. Only when power is obtained from the inner side of the relay unit or between the relay unit and the battery 1211, and two connecting ends of the auxiliary source device are directly connected to the two electrodes of the battery 1211, respectively, constant power can be obtained from the battery 1211 without being affected by the closing and opening of the relay or the like.

Generally, the battery unit 120 further comprises an SBMU corresponding to each battery 1211, and the SBMU is used for acquiring monitoring information of the corresponding battery 1211, such as temperature, voltage, and other information.

In one implementation, the auxiliary source device comprises a first auxiliary source for providing a low-voltage power source to the SBMU, which may be configured to obtain power from the direct current bus 130 or obtain constant power from the battery 1211.

Since the first auxiliary source for providing a low-voltage power source to the SBMU can obtain power from the direct current bus 130 or obtain constant power from the battery 1211, this provides multiple possible power supply modes for the SBMU, making the power supply to the SBMU more reliable.

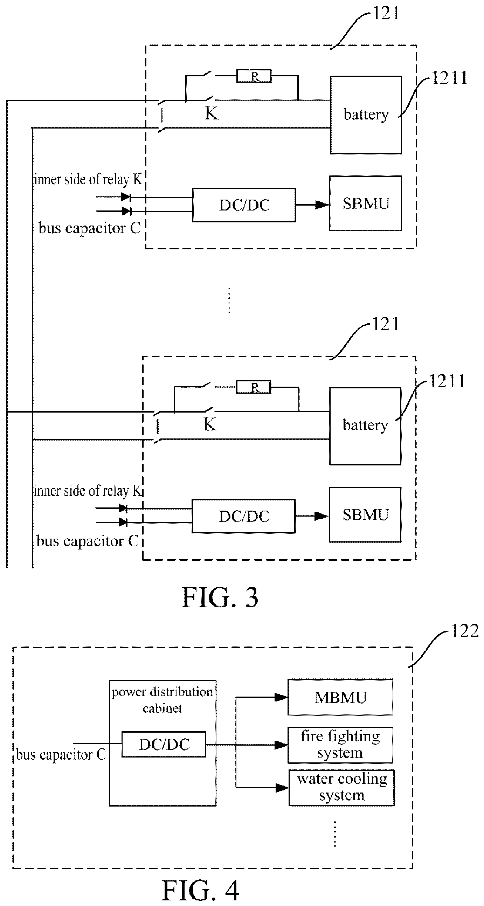

For example, as shown in FIG. 3, taking the relay unit comprising a relay K and the relay K being a main positive relay as an example, in each electric cabinet 121, the battery 1211 is connected to the relay K, and the SBMU is connected to a DC/DC for providing a low-voltage power source therefor. The DC/DC may obtain constant power from the battery 1211 or obtain power from the direct current bus 130.

The number of electric cabinets 121 in each battery unit 120 may be one or more. For example, as shown in FIGS. 2 and 3, a plurality of electric cabinets 121 may be connected together in parallel. The main control box 1212 of each electric cabinet 121 includes an SBMU for acquiring information of the corresponding battery 1211.

When a plurality of electric cabinets 121 are provided in the battery unit 120, the battery unit 120 further comprises an MBMU connected to a plurality of SBMUs in the plurality of electric cabinets 121. The MBMU is used to aggregate information of the battery 1211 in each cabinet 121. For example, as shown in FIG. 4, the MBMU is generally provided in a general control box 122 or a general control cabinet 122. The general control box 122 may further comprise a power distribution cabinet, a bus bar, a fire fighting system, a water cooling system, and other equipments located outside the electric cabinet 121. In the power distribution cabinet is mainly an auxiliary source for providing a low-voltage power source for the MBMU, the fire fighting system, the water cooling system, etc., such as a DC/DC. The general control box 122 may be disposed between the H-bridge link 110 and the main control box 1212. Communication may be performed between the MBMU and the H-bridge link 110 through an optical fiber, for example.

In one implementation, the auxiliary source device further comprises a second auxiliary source for providing a low-voltage power source for the MBMU, which may be configured to obtain power from the direct current bus 130.

Since the low-voltage electric equipments such as the MBMU are not placed in the electric cabinet 121 but in the general control box 122 outside the electric cabinet 121, in order to avoid exposing high-voltage constant power to the outside, which would pose a safety hazard during installation and maintenance, the second auxiliary source in the power distribution cabinet for providing a low-voltage power source for the low-voltage electric equipments such as the MBMU does not obtain power from the battery 1211 but from the direct current bus 130.

As shown in FIG. 4, in the general control box 122, the DC/DC in the power distribution cabinet may obtain power from the direct current bus 130 and provide a low-voltage power source for the MBMU, and the DC-DC may also provide a low-voltage power source to the fire fighting system, the water cooling system, and the like in the general control box 122. Of course, unlike what is shown in FIG. 4, different low-voltage electric equipments in the general control box 122 may also provide their respective low-voltage power sources through different DC/DCs, and these DC/DCs all obtain power from the capacitor C of the direct current bus 130.

The H-bridge link 110 is typically comprised of four insulated gate bipolar transistor (IGBT) switches 112, as shown in FIG. 2 above. In addition, the H-bridge link 110 further comprises a bypass switch 111. When the bypass switch 111 of the H-bridge link 110 is closed, the H-bridge link 110 is bypassed from the plurality of cascaded H-bridge links 110. The bypass switch 111, the IGBT switches 112, the control module, and the like of the H-bridge link 110 all require an auxiliary source to provide a low-voltage power source.

In one implementation, the auxiliary source device comprises a third auxiliary source in the H-bridge link 110 for providing a low-voltage power source, which may be configured to obtain power from the direct current bus 130.

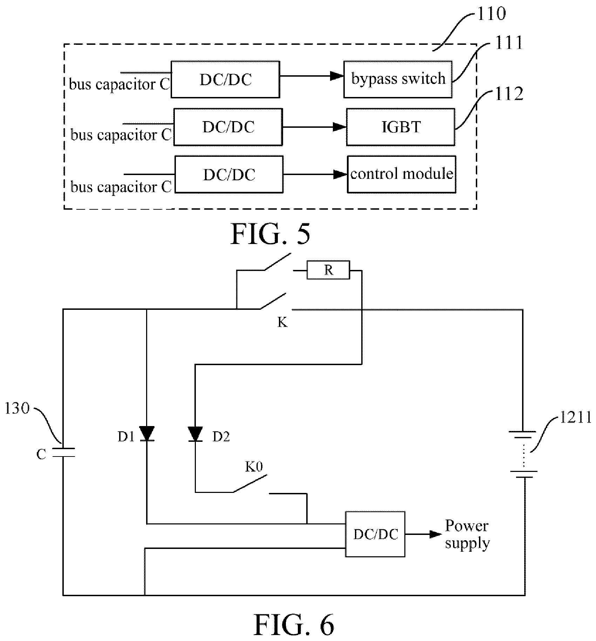

For example, as shown in FIG. 5, in the H-bridge link 110, the DC/DCs for providing a low-voltage power source for the bypass switch 111, the IGBT switches 112, the control module, and the like all obtain power from the capacitor C of the direct current bus 130 to maintain the normal function of the H-bridge link 110. Of course, unlike what is shown in FIG. 5, different switches or modules may also share a DC/DC. For example, the bypass switch 111 and the control module may share one DC/DC to provide a low-voltage power source.

Based on the above description, each auxiliary source in the energy storage sub-unit 10 can obtain power from the direct current bus 130. For example, the first auxiliary source in the electric cabinet 121 may obtain power competitively between the direct current bus 130 and the battery 1211 to maintain low-voltage power supply of the SBMU or the like in the electric cabinet 121; the second auxiliary source in the power distribution cabinet may obtain power from the direct current bus 130 to provide a low-voltage power source for the MBMU, the fire fighting system, the water cooling system or the like in the general control box 122; and the third auxiliary source in the H-bridge link 110 may obtain power from the direct current bus 130 to provide a low-voltage power source for the switches and modules in the H-bridge link 110.

The competitive power obtainment means, for example, that power is obtained from whoever has a high voltage. That is to say, in a case where a first voltage of the direct current bus 130 is greater than a second voltage between the first relay and the battery 1211, the first auxiliary source obtains power from the direct current bus 130; and in a case where the second voltage is greater than the first voltage, the first auxiliary source obtains constant power from the battery 1211.

In one implementation, an auxiliary source switch K0 is provided between one end of the relay unit connected to the battery 1211 and the first auxiliary source. The H-bridge link 110 is used to control the opening or closing of the bypass switch 111 of the H-bridge link 110, and the SBMU is used to control the closing or opening of the corresponding relay unit and the closing or opening of the corresponding auxiliary source switch K0, so that the first auxiliary source for providing a low-voltage power source to the SBMU obtains power from the direct current bus 130 or obtains constant power from the battery 1211.

In a case where the energy storage sub-unit 10 does not fail, the control module of the H-bridge link 110 is used to control the bypass switch 111 of the H-bridge link 110 to open, and the SBMU is used to control the corresponding relay unit to close and the corresponding auxiliary source switch K0 to close. At this time, the first auxiliary source for providing a low-voltage power source to the SBMU may competitively obtain power between the direct current bus 130 and the battery 1211, and the second auxiliary source and the third auxiliary source may obtain power from the direct current bus 130.

It may be understood that, in an embodiment of the present application, the SBMU, the relay unit, the auxiliary source switch K0, the first auxiliary source, and the like corresponding to the battery 1211 refer to the SBMU, the relay unit, the auxiliary source switch K0, the first auxiliary source, and the like located in the same electric cabinet 121 as the battery 1211.

In one implementation, diodes may be utilized to realize that the first auxiliary source competitively obtains power between the direct current bus 130 and the battery 1211, which is simple in operation and low in cost. For example, a first diode is provided between the first auxiliary source and the direct current bus 130, a second diode is provided between one end of the first relay connected to the battery 1211 and the first auxiliary source, and the second diode is connected to the auxiliary source switch K0. In the case that the first voltage of the direct current bus 130 is greater than the second voltage between the first relay and the battery 1211, the first diode is turned on and the second diode is turned off, so that the first auxiliary source obtains power from the direct current bus 130; in the case that the second voltage is greater than the first voltage, the second diode is turned on and the first diode is turned off, so that the first auxiliary source obtains constant power from the battery 1211.

As an example, as shown in FIG. 6, taking the relay unit comprising a relay K and the relay K being a main positive relay as an example, a first diode D1 is provided between the first auxiliary source, i.e., the DC/DC and the capacitor C of the direct current bus 130, and a second diode D2 is provided between the DC/DC and one side of the relay K close to the battery. In the case where the first voltage of the direct current bus 130 is greater than the second voltage between the first relay and the battery 1211, the first diode D1 is turned on and the second diode D2 is turned off, so that the first auxiliary source obtains power from the direct current bus 130; and in the case where the second voltage is greater than the first voltage, the second diode D2 is turned on and the first diode D1 is turned off, so that the first auxiliary source obtains constant power from the battery 1211.

Hereinafter, a power obtainment mode of each auxiliary source when a failure occurs in the energy storage sub-unit 10 will be described. The location where a failure occurs in the energy storage sub-unit 10 may be within the H-bridge link 110 or within the battery unit120, which will be described below, respectively.

In one implementation, in the case of a failure of the H-bridge link 110, the control module of the H-bridge link 110 is used to control the bypass switch 111 of the H-bridge link 110 to close, and the SBMU in each electric cabinet 121 is used to control the relay unit to open and the auxiliary source switch K0 to close, at which time the first auxiliary source in each electric cabinet 121 obtains constant power from the battery 1211.

In the case of a failure in the H-bridge link 110, the bypass switch 111 of the H-bridge link 110 is closed to bypass the failed H-bridge link 110 from the plurality of cascaded H-bridge links 110, and the relay unit in each electric cabinet 121 is opened, at which time the first voltage of the direct current bus 130 is less than the second voltage between the first relay and the battery 1211, and the first auxiliary source obtains constant power from the battery 1211. It can be seen that although the H-bridge link 110 is bypassed leaving the direct current bus 130 out of power, since the battery unit 120 does not fail, the first auxiliary source may obtain constant power from the battery 1211, so that the SBMU can normally monitor the status of the battery 1211. At this time, there is no auxiliary source for power supply in the H-bridge link 110 and the general control box 122.

In one implementation, in the case of a failure of the first battery in the battery unit 120, the control module of the H-bridge link 110 is used to control the bypass switch 111 of the H-bridge link 110 to open, and the SBMU corresponding to the first battery is used to control the relay unit corresponding to the first battery to open and the corresponding auxiliary source switch K0 to open, and the first auxiliary source corresponding to the first battery obtains power from the direct current bus 130.

In the case of a failure of the battery 1211 in part of the electric cabinets 121 of the battery unit 120, wherein the part of the electric cabinets 121 may be one or more, the bypass switch 111 of the H-bridge link 110 is opened so that there is power on the direct current bus 130, and the relay unit to which the failed battery 1211 is connected is opened to reduce the risk brought about by the battery failure. At this time, the first voltage of the direct current bus 130 is greater than the second voltage between the first relay and the battery 1211, and the first auxiliary source obtains power from the direct current bus 130. It can be seen that despite the failure of the battery 1211, the first auxiliary source may obtain power from the direct current bus 130 to ensure the low-voltage power supply of the SBMU, so that the SBMU can normally monitor the status of the battery 1211.

In one implementation, in the case where all the batteries 1211 of the battery unit 120 are faulty, the control module of the H-bridge link 110 is used to control the bypass switch 111 of the H-bridge link 110 to open, and the SBMU corresponding to each battery 1211 is used to control the corresponding relay unit to open and the corresponding auxiliary source switch K0 to open, and the first auxiliary source corresponding to each battery 1211 obtains power from the direct current bus 130.

And for those unfailed batteries 1211 in the remaining electric cabinets 121, there are the following two possibilities.

In one implementation, in the case where an unfailed second battery of the battery unit 120 meets charging/discharging requirements of the energy storage device 1, the SBMU corresponding to the second battery is further used to control the relay unit corresponding to the second battery to close and the corresponding auxiliary source switch K0 to close, and the first auxiliary source corresponding to the second battery competitively obtains power between the direct current bus 130 and the battery 1211.

In one implementation, in the case where the unfailed second battery of the battery unit 120 does not correspondingly meet the charging/discharging requirements of the energy storage device 1, the SBMU corresponding to the second battery is further used to control the relay unit corresponding to the second battery to open and the corresponding auxiliary source switch K0 to close, and the first auxiliary source corresponding to the second battery competitively obtains power from between the direct current bus 130 and the battery 1211.

Specifically, for the unfailed batteries 1211 in the remaining electric cabinets 121, if they can meet the charging/discharging requirements of the energy storage device 1, then the relay units in the remaining electric cabinets 121 remain closed, so that these batteries 1211 continue to be connected to the energy storage device 1 for normal power supply, reducing the influence of the battery failure on the energy storage device 1; and if the remaining unfailed batteries 1211 cannot meet the charging/ discharging requirements of the energy storage device 1, the relay units in the remaining electric cabinets 121 are opened, so that these batteries 1211 are no longer connected to the energy storage device 1 for power supply. At this time, since the H-bridge link 110 is in operation, there is power on the direct current bus 130, and the auxiliary source switches K0 in the remaining unfailed electric cabinets 121 remain closed, the first auxiliary sources in these electric cabinets 121 may competitively obtain power between the direct current bus 130 and the battery 1211 to ensure the low-voltage power supply of the SBMU, so that the SBMU can normally monitor the status of the battery 1211.

It may be understood that the closing or opening of the auxiliary source switch K0 connected to the first auxiliary source depends on whether the battery 1211 connected thereto is faulty. When the battery 1211 is faulty, the auxiliary source switch K0 is opened, so that the auxiliary source cannot obtain power from the battery 1211; and when the battery 1211 is normal, the auxiliary source switch K0 remains closed, so that the auxiliary source can obtain power from the battery 1211. The closing and opening of the relay unit depends on whether the battery 1211 connected thereto can be connected to the energy storage device 1 for normal power supply. If the battery 1211 is faulty or the battery 1211 is not faulty but does not need to be connected to the energy storage device 1 for normal power supply, then the relay unit is opened; and if the battery 1211 is not faulty and needs to be connected to the energy storage device 1 for normal power supply, then the relay unit is closed.

In an embodiment of the present application, the failure of the battery 1211 comprises any situation that may cause danger, such as over-voltage, under-voltage, disconnection, or liquid leakage of the battery 1211.

In the case of a failure in the battery unit 120, the bypass switch of the H-bridge link 110 remains opened and there is always power on the direct current bus 130, so the second auxiliary source in the power distribution cabinet and the third auxiliary source in the H-bridge link 110 may obtain power from the direct current bus 130.

If a fault occurs in both the H-bridge link 110 and the battery unit 120, the bypass switch 111 of the H-bridge link is closed, the relay units and the auxiliary source switches K0 in all the electric cabinets 121 are opened, at which time the entire energy storage device 1 should be immediately shut down and disconnected from the grid, and undergo maintenance to prevent a serious secondary disaster.

As an example, Table 1 shows power obtainment modes of each auxiliary source in the energy storage device 1 in different states.

**Table 1**

| status | bypass switch | relay unit | auxiliary source switch | | first auxiliary source | second auxiliary source | third auxiliary source |
|---|---|---|---|---|---|---|---|
| neither the H-bridge link nor the battery fails | opened | closed | closed | | competitively obtaining power | obtaining power from the direct current bus | |
| a failure in the H-bridge link | closed | opened | closed | | obtaining constant power from the battery | not obtaining power | |
| a failure in the battery | failed battery | | opened | opened | opened | obtaining power from the direct current bus | obtaining power from the direct current bus |
| | unfailed battery | continue to use | | closed | closed | competitively obtaining power | |
| | | not use | | opened | closed | competitively obtaining power | |
| both the H-bridge link and the battery fail | | | closed | opened | opened | not obtaining power | |

The energy storage device 1 according to an embodiment of the present application may further have a function of black start, that is, the energy storage device 1 has a self-start function in the case of off-grid, which requires the SMBU to always have constant power to ensure that the SMBU can receive an instruction for black start issued by a management system, such as a battery management system (BMS) or an energy management system (BMS) so as to close the relay unit, so that the energy storage device 1 may start by itself.

Since the MBMU is not placed in the electric cabinet 121 but in the general control box 122 outside the electric cabinet 121, in order to avoid exposing high-voltage constant power of the battery to the outside, which would pose a safety hazard during installation and maintenance, the MBMU obtains power from the direct current bus 130 instead of from the battery 1211. This results in the MBMU having no constant power, and only SBMU can obtain constant power from the battery 1211, and thus the SBMU has constant power.

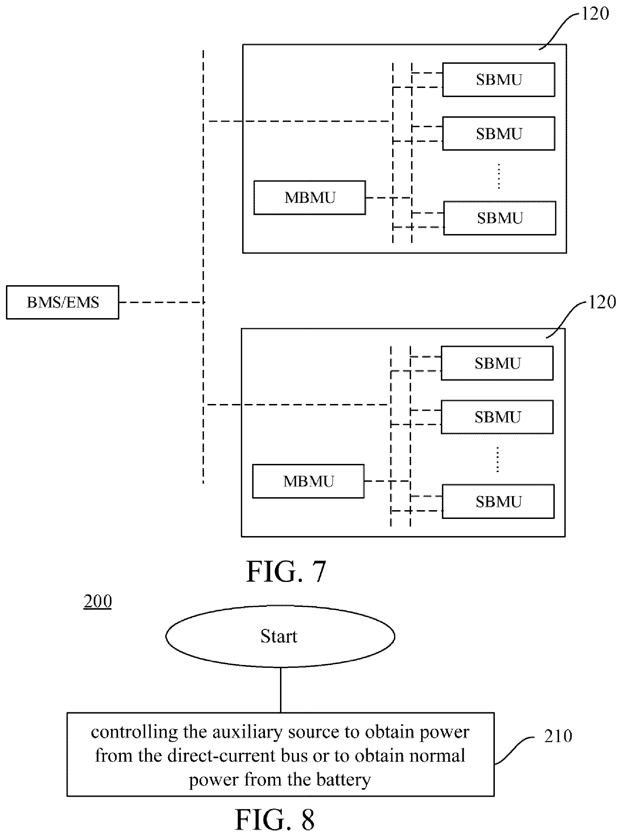

As shown in FIG. 7, in consideration of the problem of voltage resistance of the energy storage device 1, the SBMU and the management system of the battery unit 120 may communicate through an optical fiber, for example. The optical fiber is used to transmit an instruction sent by the management system to the SBMU, and the instruction is used to instruct the SBMU to control the corresponding relay unit to close. After receiving the instruction through the optical fiber, the SBMU controls the relay unit to close according to the instruction, so that there is power on a low-voltage system of the entire energy storage sub-unit 10 to achieve black start of the energy storage device 1.

The present application further provides a control method 200 for the energy storage device 1 in any one of the above embodiments. The energy storage device 1 comprises a PCS which comprises a plurality of H-bridge links 110. The plurality of H-bridge links 110 are respectively connected to a plurality of battery units 120. Each of the battery units 120 comprises at least one battery 1211. Each of the H-bridge links 110 is used for conversion of an alternating current signal and a direct current signal which charges/discharges the battery 1211 through a direct current bus 130 between the H-bridge link 110 and the battery unit 120. The energy storage device 1 further comprises an auxiliary source device for providing a low-voltage power source, such as a DC/DC converter. As shown in FIG. 8, the control method 200 comprises step 210.

In step 210, the auxiliary source device is controlled to obtain power from the direct current bus 130 or to obtain constant power from the battery 1211.

In one implementation, the battery unit 120 further comprises a relay unit connected to the battery 1211. The relay unit comprises a first relay connected to a first electrode of the battery 1211. One end of the auxiliary source device is connected between the first relay and the first electrode, and the other end of the auxiliary source device is connected to a second electrode of the battery.

In one implementation, the battery unit 120 further comprises a relay unit connected to the battery 1211. The relay unit comprises a first relay connected to the first electrode of the battery 1211 and a second relay connected to the second electrode of the battery 1211. One end of the auxiliary source device is connected between the first relay and the first electrode, and the other end of the auxiliary source device is connected between the second relay and the second electrode.

In one implementation, the battery unit 120 further comprises an SBMU corresponding to the battery 1211. The auxiliary source device comprises a first auxiliary source for providing a low-voltage power source to the SBMU. The controlling the auxiliary source device to obtain power from the direct current bus 130 or to obtain constant power from the battery 1211 comprises: controlling the first auxiliary source to obtain power from the direct current bus 130 or to obtain constant power from the battery 1211.

In one implementation, an auxiliary source switch K0 is provided between one end of the first relay connected to the battery 1211 and the first auxiliary source. The controlling the first auxiliary source to obtain power from the direct current bus 130 or to obtain constant power from the battery 1211 comprises: controlling the bypass switch 111 of the H-bridge link 110, the relay unit, and the auxiliary source switch K0, so that the first auxiliary source obtains power from the direct current bus 130 or obtains constant power from the battery 1211.

In one implementation, the controlling the bypass switch 111 of the H-bridge link 110, the relay unit, and the auxiliary source switch K0, so that the first auxiliary source obtains power from the direct current bus 130 or obtains constant power from the battery 1211 comprises: in a case where neither the H-bridge link 110 nor the battery unit 120 fails, controlling the bypass switch 111 of the H-bridge link 110 to open, the relay unit to close, and the auxiliary source switch K0 to close, so that the first auxiliary source obtains power competitively between the direct current bus 130 and the battery 1211. The competitive power obtainment comprises, for example, obtaining power from the direct current bus 130 in a case where the first voltage of the direct current bus 130 is greater than a second voltage between the first relay and the battery 1211; and obtaining constant power from the battery 1211 in a case where the second voltage is greater than the first voltage.

In one implementation, controlling the bypass switch 111 of the H-bridge link 110, the relay unit, and the auxiliary source switch K0, so that the first auxiliary source obtains power from the direct current bus 130 or obtains constant power from the battery 1211 comprises: in a case of a failure of the H-bridge link 110, controlling the bypass switch 111 of the H-bridge link 110 to close, the relay unit corresponding to each battery 1211 to open, and the corresponding auxiliary source switch K0 to close, so that the first auxiliary source corresponding to each battery 1211 obtains constant power from the battery 1211.

In one implementation, controlling the bypass switch 111 of the H-bridge link 110, the relay unit, and the auxiliary source switch K0, so that the first auxiliary source obtains power from the direct current bus 130 or obtains constant power from the battery 1211 comprises: in a case of a failure of a first battery in the battery unit 120, controlling the bypass switch 111 of the H-bridge link 110 to open, and allowing the SBMU corresponding to the first battery to be used for controlling the relay unit corresponding to the first battery to open and the corresponding auxiliary source switch K0 to open, so that the first auxiliary source corresponding to the first battery obtains power from the direct current bus 130.

In one implementation, controlling the bypass switch 111 of the H-bridge link 110, the relay unit, and the auxiliary source switch K0, so that the first auxiliary source obtains power from the direct current bus 130 or obtains constant power from the battery 1211 comprises: in a case where an unfailed second battery of the battery unit 120 meets charging/discharging requirements of the energy storage device 1, controlling the relay unit corresponding to the second battery to close and the corresponding auxiliary source switch K0 to close, so that the first auxiliary source corresponding to the second battery competitively obtains power between the direct current bus 130 and the battery 1211.

In one implementation, controlling the bypass switch 111 of the H-bridge link 110, the relay unit, and the auxiliary source switch K0, so that the first auxiliary source obtains power from the direct current bus 130 or obtains constant power from the battery 1211 comprises: in a case where the unfailed second battery of the battery unit 120 does not meet the charging/discharging requirements of the energy storage device 1, controlling the relay unit corresponding to the second battery to open and the corresponding auxiliary source switch K0 to close, so that the first auxiliary source corresponding to the second battery competitively obtains power between the direct current bus 130 and the battery 1211.

In one implementation, the number of the at least one battery 1211 is multiple. The battery unit 120 further comprises an MBMU connected to the SBMUs corresponding to the plurality of batteries. The auxiliary source device comprises a second auxiliary source for providing a low-voltage power source to the MBMU. The control method 200 further comprises: controlling the second auxiliary source to obtain power from the direct current bus 130.

In one implementation, the auxiliary source device comprises a third auxiliary source in the H-bridge link 110 for providing a low-voltage power source. The control method 200 further comprises: controlling the third auxiliary source to obtain power from the direct current bus 130.

In one implementation, the SBMU in the battery unit 120 is connected to a management system of the battery unit 120 through an optical fiber. The management system comprises an EMS or a BMS. The control method 200 further comprises: receiving an instruction sent by the management system through the optical fiber; and controlling, according to the instruction, the battery unit 120 to close, so as to achieve black start of the energy storage device 1.

It should be understood that for the specific details of the control method 200, reference may be made to the related description of the energy storage device 1 above, which will not be repeated here for the sake of brevity.

It should be noted that, under the premise of no conflict, the embodiments described in the present application and/or the technical features in the embodiments may be arbitrarily combined with each other, and the technical solution obtained after the combination should also fall within the scope of protection of the present application.

Those of ordinary skill in the art may realize that the units and algorithm steps of each example described in conjunction with the embodiments disclosed herein may be implemented in electronic hardware, or a combination of computer software and electronic hardware. Whether these functions are performed in hardware or software depends on the particular application and design constraints of the technical solution. Skilled artisans may use different methods to implement the described functions for each particular application, but such implementation should not be considered beyond the scope of the present application.

Those skilled in the art may clearly understand that, for the convenience and brevity of description, for the specific working processes of the systems, devices, and units described above, reference may be made to the corresponding processes in the above method embodiments, which will not be repeated herein.

In several embodiments provided in the present application, it should be understood that the disclosed systems, devices, and methods may be implemented in other ways. For example, the device embodiments described above are merely illustrative. For example, the division of the units is merely a logical function division, and there may be other division manners in actual implementation. For example, a plurality of units or assemblies may be combined or may be integrated into another system, or some features may be ignored or not performed. On the other hand, the mutual coupling or direct coupling or communication connection shown or discussed may be through some interfaces, and the indirect coupling or communication connection between the devices or units may be in an electrical, mechanical or other forms.

The units described as separate components may or may not be physically separated, and the components shown as units may or may not be physical units, that is, may be located in one place, or may be distributed over a plurality of network units. Some or all of the units may be selected according to actual requirements to achieve the purpose of the solution of this embodiment.

## Claims

1. An energy storage device, comprising a power conversion system (PCS), wherein the PCS comprises a plurality of H-bridge links respectively connected to a plurality of battery units, each of the battery units comprises at least one battery, and each of the H-bridge links is used for conversion of an alternating current signal and a direct current signal which charges and discharges the battery by means of a direct current bus between the H-bridge link and the battery unit; and
wherein the energy storage device further comprises an auxiliary source device for providing a low-voltage power source, which is configured to obtain power from the direct current bus or to obtain constant power from the battery.

2. The energy storage device according to claim 1, wherein the battery unit further comprises a relay unit connected to the battery, the relay unit comprises a first relay connected to a first electrode of the battery, one end of the auxiliary source device is connected between the first relay and the first electrode, and the other end of the auxiliary source device is connected to a second electrode of the battery.

3. The energy storage device according to claim 1, wherein the battery unit further comprises a relay unit connected to the battery, the relay unit comprises a first relay connected to the first electrode of the battery and a second relay connected to the second electrode of the battery, one end of the auxiliary source device is connected between the first relay and the first electrode, and the other end of the auxiliary source device is connected between the second relay and the second electrode.

4. The energy storage device according to claim 2 or 3, wherein the battery unit comprises a secondary battery management unit (SBMU) corresponding to the battery, and the auxiliary source device comprises a first auxiliary source for providing a low-voltage power source to the SBMU, which is configured to obtain power from the direct current bus or to obtain constant power from the battery.

5. The energy storage device according to claim 4, wherein an auxiliary source switch is provided between one end of the first relay connected to the battery and the first auxiliary source, a control module of the H-bridge link is used for controlling a bypass switch of the H-bridge link, and the SBMU is used for controlling the relay unit and the auxiliary source switch, so that the first auxiliary source obtains power from the direct current bus or obtains constant power from the battery.

6. The energy storage device according to claim 5, wherein in a case where neither the **H-**bridge link nor the battery unit fails, the control module of the H-bridge link is used for controlling the bypass switch of the H-bridge link to open, the SBMU is used for controlling the relay unit to close and the auxiliary source switch to close, and the first auxiliary source obtains power competitively between the direct current bus and the battery; and
wherein the competitive power obtainment comprises obtaining power from the direct current bus in a case where a first voltage on the direct current bus is greater than a second voltage between the first relay and the battery, and obtaining constant power from the battery in a case where the second voltage is greater than the first voltage.

7. The energy storage device according to claim 5, wherein in a case of a failure of the **H-**bridge link, the control module of the H-bridge link is used for controlling the bypass switch of the H-bridge link to close, the SBMU is used for controlling the relay unit to open and the auxiliary source switch to close, and the first auxiliary source obtains constant power from the battery.

8. The energy storage device according to claim 5, wherein in a case of a failure of a first battery in the batter unit, the control module of the H-bridge link is used for controlling the bypass switch of the H-bridge link to open, the SBMU corresponding to the first battery is used for controlling the relay unit corresponding to the first battery to open and the corresponding auxiliary source switch to open, and the first auxiliary source corresponding to the first battery obtains power from the direct current bus.

9. The energy storage device according to claim 8, wherein in a case where an unfailed second battery of the battery unit meets charging/discharging requirements of the energy storage device, the SBMU corresponding to the second battery is further used for controlling the relay unit corresponding to the second battery to close and the corresponding auxiliary source switch to close, and the first auxiliary source corresponding to the second battery obtains power competitively between the direct current bus and the battery.

10. The energy storage device according to claim 8, wherein in a case where the unfailed second battery of the battery unit does not meet the charging/discharging requirements of the energy storage device, the SBMU corresponding to the second battery is further used for controlling the relay unit corresponding to the second battery to open and the corresponding auxiliary source switch to close, and the first auxiliary source corresponding to the second battery obtains power competitively between the direct current bus and the battery.

11. The energy storage device according to claim 5, wherein a first diode is provided between the first auxiliary source and the direct current bus, a second diode is provided between one end of the first relay connected to the battery and the first auxiliary source, and the second diode is connected to the auxiliary source switch; and
wherein in the case where the first voltage on the direct current bus is greater than the second voltage between the first relay and the battery, the first diode is turned on and the second diode is turned off, so that the first auxiliary source obtains power from the direct current bus, and
in the case where the second voltage is greater than the first voltage, the second diode is turned on and the first diode is turned off, so that the first auxiliary source obtains constant power from the battery.

12. The energy storage device according to any one of claims 1-3, wherein the number of the at least one battery is multiple, the battery unit further comprises a main battery management unit (MBMU) connected to the secondary battery management units (SBMUs) corresponding to the plurality of the batteries, and the auxiliary source device comprises a second auxiliary source for providing a low-voltage power source to the MBMU, which is configured to obtain power from the direct current bus.

13. The energy storage device according to any one of claims 1-3, wherein the auxiliary source device comprises a third auxiliary source in the H-bridge link for providing a low-voltage power source, which is configured to obtain power from the direct current bus.

14. The energy storage device according to any one of claims 1-3, wherein the secondary battery management unit (SBMU) in the battery unit is connected to a management system of the battery unit through an optical fiber, the management system comprises an energy management system (EMS) or a battery management system (BMS), the optical fiber is used to transmit an instruction sent by the management system to the SBMU, and the instruction is used to instruct the SBMU to control the relay unit in the battery unit to close, so as to achieve black start of the energy storage device.

15. The energy storage device according to any one of claims 1-3, wherein the auxiliary source device further comprises a direct current/direct current (DC/DC) converter.

16. A control method for an energy storage device, wherein the energy storage device comprises a power conversion system (PCS), the PCS comprising a plurality of H-bridge links respectively connected to a plurality of battery units, each of the battery units comprising at least one battery, each of the H-bridge links being used for conversion of an alternating current signal and a direct current signal which charges and discharges the battery by means of a direct current bus between the H-bridge link and the battery unit, the energy storage device further comprising an auxiliary source device for providing a low-voltage power source, and the control method comprising:
controlling the auxiliary source device to obtain power from the direct current bus or to obtain constant power from the battery.

17. The control method according to claim 16, wherein the battery unit further comprises a relay unit connected to the battery, the relay unit comprises a first relay connected to a first electrode of the battery, one end of the auxiliary source device is connected between the first relay and the first electrode, and the other end of the auxiliary source device is connected to a second electrode of the battery.

18. The control method according to claim 16, wherein the battery unit further comprises a relay unit connected to the battery, the relay unit comprises a first relay connected to the first electrode of the battery and a second relay connected to the second electrode of the battery, one end of the auxiliary source device is connected between the first relay and the first electrode, and the other end of the auxiliary source device is connected between the second relay and the second electrode.

19. The control method according to claim 17 or 18, wherein the battery unit further comprises a secondary battery management unit (SBMU), the auxiliary source device comprises a first auxiliary source for providing a low-voltage power source to the SBMU, and the controlling the auxiliary source device to obtain power from the direct current bus or to obtain constant power from the battery comprises:
controlling the first auxiliary source to obtain power from the direct current bus or to obtain constant power from the battery.

20. The control method according to claim 19, wherein an auxiliary source switch is provided between one end of the first relay connected to the battery and the first auxiliary source, and the controlling the first auxiliary source to obtain power from the direct current bus or to obtain constant power from the battery comprises:
controlling a bypass switch of the H-bridge link, the relay unit, and the auxiliary source switch, so that the first auxiliary source obtains power from the direct current bus or obtains constant power from the battery.

21. The control method according to claim 20, wherein the controlling the bypass switch of the H-bridge link, the relay unit, and the auxiliary source switch, so that the first auxiliary source obtains power from the direct current bus or obtains constant power from the battery comprises:
in a case where neither the H-bridge link nor the battery unit fails, controlling the bypass switch of the H-bridge link to open, the relay unit to close, and the auxiliary source switch to close, so that the first auxiliary source obtains power competitively between the direct current bus and the battery; and
wherein the competitive power obtainment comprises obtaining power from the direct current bus in a case where a first voltage on the direct current bus is greater than a second voltage between the first relay and the battery, and obtaining constant power from the battery in a case where the second voltage is greater than the first voltage.

22. The control method according to claim 20, wherein the controlling the bypass switch of the H-bridge link, the relay unit, and the auxiliary source switch, so that the first auxiliary source obtains power from the direct current bus or obtains constant power from the battery comprises:
in a case of a failure of the H-bridge link, controlling the bypass switch of the H-bridge link to close, the relay unit to open, and the auxiliary source switch to close, so that the first auxiliary source obtains constant power from the battery.

23. The control method according to claim 20, wherein the controlling the bypass switch of the H-bridge link, the relay unit, and the auxiliary source switch, so that the first auxiliary source obtains power from the direct current bus or obtains constant power from the battery comprises:
in a case of a failure of a first battery in the battery unit, controlling the bypass switch of the H-bridge link to open, the relay unit to which the first battery is connected to open, and the corresponding auxiliary source switch to open, so that the first auxiliary source corresponding to the first battery obtains power from the direct current bus.

24. The control method according to claim 23, wherein the controlling the bypass switch of the H-bridge link, the relay unit, and the auxiliary source switch, so that the first auxiliary source obtains power from the direct current bus or obtains constant power from the battery comprises:
in a case where an unfailed second battery of the battery unit meets charging/discharging requirements of the energy storage device, controlling the relay unit corresponding to the second battery to close and the corresponding auxiliary source switch to close, so that the first auxiliary source corresponding to the second battery obtains power competitively between the direct current bus and the battery.

25. The control method according to claim 23, wherein the controlling the bypass switch of the H-bridge link, the relay unit, and the auxiliary source switch, so that the first auxiliary source obtains power from the direct current bus or obtains constant power from the battery comprises:
in a case where the unfailed second battery of the battery unit does not meet the charging/discharging requirements of the energy storage device, controlling the relay unit corresponding to the second battery to open and the corresponding auxiliary source switch to close, so that the first auxiliary source corresponding to the second battery obtains power competitively between the direct current bus and the battery.

26. The control method according to claim 20, wherein a first diode is provided between the first auxiliary source and the direct current bus, a second diode is provided between one end of the first relay connected to the battery and the first auxiliary source, and the second diode is connected to the auxiliary source switch; and
wherein in the case where the first voltage on the direct current bus is greater than the second voltage between the first relay and the battery, the first diode is turned on and the second diode is turned off, so that the first auxiliary source obtains power from the direct current bus, and
in the case where the second voltage is greater than the first voltage, the second diode is turned on and the first diode is turned off, so that the first auxiliary source obtains constant power from the battery.

27. The control method according to any one of claims 16-18, wherein the number of the at least one battery is multiple, the battery unit further comprises a main battery management unit (MBMU) connected to the secondary battery management units (SBMUs) corresponding to the plurality of the batteries, the auxiliary device comprises a second auxiliary source for providing a low-voltage power source to the MBMU, and the control method further comprises:
controlling the second auxiliary source to obtain power from the direct current bus.

28. The control method according to any one of claims 16-18, wherein the auxiliary source device comprises a third auxiliary source in the H-bridge link for providing a low-voltage power source, and the control method further comprises:
controlling the third auxiliary source to obtain power from the direct current bus.

29. The control method according to any one of claims 16-18, wherein the secondary battery management unit (SBMU) in the battery unit is connected to a management system of the battery unit through an optical fiber, the management system comprises an energy management system (EMS) or a battery management system (BMS), and the control method further comprises:
receiving an instruction sent by the management system through the optical fiber; and
controlling, according to the instruction, the relay unit in the battery unit to close, so as to achieve black start of the energy storage device.

30. The control method according to any one of claims 16-18, wherein the auxiliary source device comprises a direct current/direct current (DC/DC) converter.
